# EUROPÄISCHE PATENTSCHRIFT

(11) **EP 0 997 331 B1**
(45) Veröffentlichungstag und Bekanntmachung des Hinweises auf die Patenterteilung: **04.01.2006**
(21) Anmeldenummer: 99121481.8
(22) Anmeldetag: 28.10.1999
(51) Int. Cl.: B60J 5/04

(54) **Fahrzeugtür**
Vehicle door
Porte de véhicule

(30) Priorität: 30.10.1998 DE 19850150
(43) Veröffentlichungstag der Anmeldung: 03.05.2000
(73) Patentinhaber: DURA Automotive Body & Glass Systems GmbH & Co. KG, 58840 Plettenberg (DE)
(72) Erfinder: Schulte, Martin, 58802 Balve (DE); Horstkötter, Ralf, 58644 Iserlohn (DE)
(74) Vertreter: Gossel, Hans K.

(56) Entgegenhaltungen:
- EP-A- 0 776 778
- EP-A- 0 818 339
- GB-A- 2 316 431
- PATENT ABSTRACTS OF JAPAN vol. 1998, no. 14, 31. Dezember 1998 (1998-12-31) & JP 10 258328 A (HONDA MOTOR CO LTD), 29. September 1998 (1998-09-29)

## Beschreibung

Die Erfindung betrifft eine Fahrzeugtür mit einem unteren Türkasten mit aufgesettem oberen Rahmenteil.

Der Trend im modemen Kraftfahrzeugbau geht dahin, möglichst leichte Fahrzeuge zu schaffen, die entsprechend sparsamer im Kraftstoffverbrauch sind, ohne jedoch durch derartige Leichtbauweisen Einbußen an Sicherheit hinnehmen zu müssen. Nachdem Leichtbaumaßnahmen an Motoren und Fahrwerkteilen, insbesondere bei hochwertigen Fahrzeugen, weitgehend ausgeschöpft sind, ist es ein Bedürfnis, auch die Karosserien in leichterer Bauweise auszuführen, ohne daß darunter deren Stabilität leidet.

Es ist bekannt, Fahrzeugtüren aus Aluminium herzustellen. Diese bestehen jedoch üblicherweise aus mehreren Einzelteilen, die im Sichtbereich zusammengefügt sind, so daß die Nahtstellen unschön in Erscheinung treten. Weiterhin hat diese Bauweise auch Einfluß auf die Oberflächenqualität und die Prozeßsicherheit.

Aus der GB-A-2 316 431 ist eine Fahrzeugtür bekannt, die aus einer Anzahl von Aluminium-Strangprofilen und Verbindungsteilen aus Aluminium-Guß besteht.

Aufgabe der Erfindung ist es, eine Fahrzeugtür aus Leichtmetall zu schaffen, die ein einheitliches und gutes Aussehen vermittelt, eine große Stabilität aufweist und sich sicher und mit wenig Ausschuß fertigen läßt.

Erfindungsgemäß wird diese Aufgabe bei einer Fahrzeugtür der eingangs angegebenen Art durch die Merkmale des Anspruchs 1 gelöst. Der Türkasten besteht aus einem gebogenen Strangpreßprofil aus Aluminium und aus mit diesem verbundenen, aus Preßteilen aus Aluminiumblech geformten Außen- und Innenblechen, die einteilig hergestellt sind.

Bei der erfindungsgemäßen Fahrzeugtür besteht der untere Rahmenteil des Türkastens aus einem Strangpreßprofil aus Aluminium, das beispielsweise durch Streckbiegen in die der Tür entsprechende bügelartige Form mit nach oben weisenden Schenkeln gebogen ist. Dieser untere gebogene Rahmenteil wird von Außen- und Innenblechen aus Preßteilen aus Aluminiumblech eingefaßt, wobei die Preßteile dem unteren Rahmenteil ihrer Form nach angepaßt sind, so daß diese den unteren Rahmenteil etwa schalenartig einfassen. Die entsprechend geformten Außen- und Innenbleche sind mit dem unteren Rahmenteil verbunden, vorzugsweise verschweißt.

Es ist bekannt, den Türkasten im wesentlichen einteilig als ein Preßteil aus Stahlblech herzustellen. Eine derartige Herstellungsweise ist aber bei Verwendung von Aluminiumblech nicht möglich, da Aluminiumblech nur mit einem relativ geringen Umformgrad verformt werden kann. Diesem Umstand trägt die Erfindung dadurch Rechnung, daß der Türkasten aus mit dem mittleren Rahmenteil verbundenen Preßteilen aus Aluminiumblech besteht, die nur einen verhältnismäßig geringen Umformgrad aufweisen, der bei Aluminiumblechen problemlos verwirklicht werden kann. Da das Innenblech und insbesondere auch das Außenblech einteilig hergestellt ist, treten keine Fügestellen und Verbindungsnähte unschön in Erscheinung. Auch der Bördelflansch der Außenkante der Tür ist einteilig mit dem Außenblech hergestellt, so daß sich die Außenhaut einfach und paßgerecht aufbringen läßt.

Bei der weiteren Ausgestaltung der Erfindung ist vorgesehen, daß die nach oben weisenden Schenkel des Strangpreßprofils aus Aluminium mit den nach unten weisenden Schenkeln des ebenfalls aus einem Strangpreßprofil aus Aluminium bestehenden oberen Rahmenteils durch zwischengeschaltete Schloß- und Scharnierverstärkungsteile aus Aluminiumguß verbunden sind. Die die Schloß- und Schamierverstärkungsteile bildenden Aluminiumgußstücke sind der Form der frei auslaufenden Schenkel der oberen und unteren bügelförmigen Rahmenteile angepaßt, so daß sich diese paßgenau zusammenfügen und gut verbinden lassen.

Die inneren und äußeren Schachtverstärkungen, die ebenfalls zweckmäßigerweise aus Strangpreßprofilen aus Aluminium bestehen, können mit den Schloß- und Scharnierverstärkungsteilen oder aber auch mit den Schenkeln der unteren oder oberen Rahmenteile verbunden bzw. verschweißt sein.

Zweckmäßigerweise sind die Strangpreßprofile der oberen und/oder unteren Rahmenteile mit Profilabschnitten zur Aufnahme und Halterung von Dichtungen versehen.

Die erfindungsgemäße Fahrzeugtür zeichnet sich durch ein gutes Aussehen aus, weil der Sichtbereich des Türkastens innen und außen aus einem Teil hergestellt ist. Die einteilige Herstellung hat eine gute Oberflächenqualität zur Folge. Durch die Gußteile ist die Tür nur an den Stellen versteift, die eine größere Steifigkeit aufweisen sollen. An die Gußteile sind nicht nur die Profile angebunden, sie können auch zur Befestigung und/oder Integration anderer Teile, beispielsweise eines Spiegeldreiecks verwendet werden.

Die Schweißnähte werden größtenteils im Laserschweißverfahren ausgeführt, um in die Aluminiumteile nur möglichst wenig Wärme einzuleiten. Trotz der Leichtbauweise zeichnet sich die erfindungsgemäße Fahrzeugtür durch große Festigkeit und Steifigkeit aus. Auch die Gußteile sind sehr leicht und passen sich damit der erfindungsgemäßen Leichtbauweise an, weil sie relativ klein und dünnwandig gehalten werden können. Statt Aluminium können natürlich auch Aluminiumlegierungen verwendet werden.

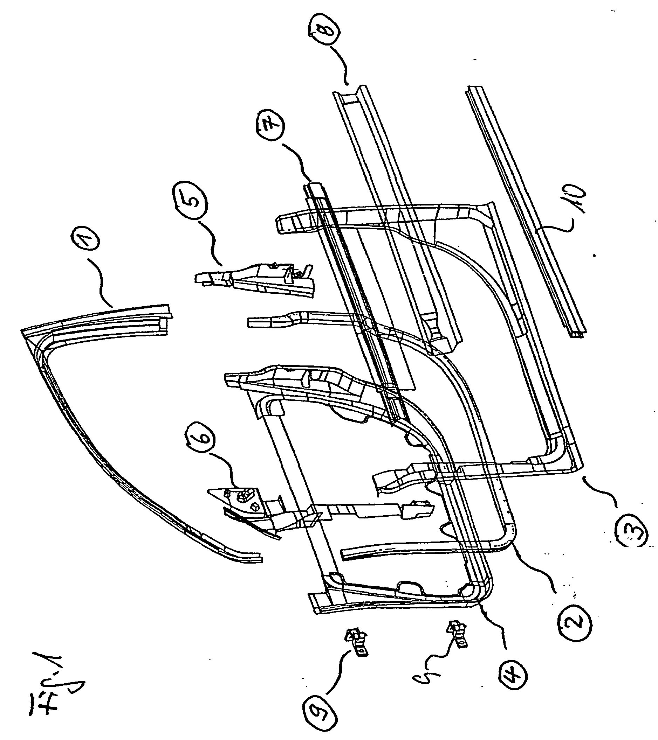

Ein Ausführungsbeispiel der Erfindung wird nachstehend anhand der Zeichnung näher erläutert. In dieser zeigt
- Fig. 1: die erfindungsgemäße Rohbautür im auseinandergezogenen Zustand ihrer Einzelteile,

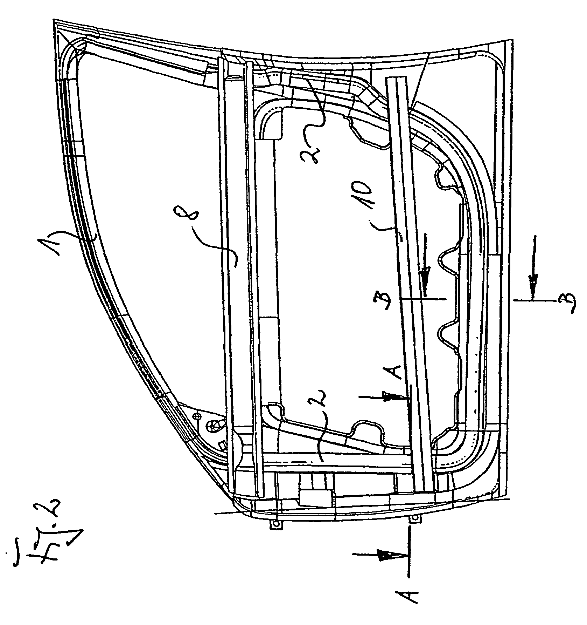

- Fig. 2: die Rohbautür nach Fig. 1 im zusammengebauten Zustand,
- Fig. 3: einen Schnitt durch die Rohbautür längs der Linie A-A in Fig. 2 und
- Fig. 4: einen Schnitt durch die Rohbautür längs der Linie B-B in Fig. 2.

Die erfindungsgemäße Fahrzeugtür besteht aus einem oberen Rahmenteil 1 und aus einem unteren Rahmenteil 2, wobei mit dem unteren Rahmenteil 2 das äußere Türblech 3 und das innere Türblech 4 verschweißt sind. Mit den nach oben weisenden Schenkeln des unteren Rahmenteils 2 ist einerseits die Schloßverstärkung 5 und andererseits die Scharnierverstärkung 6 verbunden. Beide bestehen aus Aluminiumgußteilen. Mit den Schloß- und Scharnierverstärkungen 5, 6 sind die unteren Schenkel des oberen Rahmenteils 1 verbunden. Weiterhin sind mit den Schloß- und Scharnierverstärkungen 5, 6 die innere Schachtverstärkung 7 verschweißt.

Mit dem Schloßverstärkungsteil 6 sind die Scharniere 9 verschraubt oder in anderer Weise verbunden.

Mit den Schenkeln des unteren Rahmenteils 2 ist der Seitenaufprallträger 10 verschweißt, der aus einem Stranggußprofil aus Aluminium besteht. Andere zweckmäßige Verbindungen sind möglich.

Der untere Rahmenteil 2 besteht aus einem Stranggußprofil aus Aluminium, das durch Streckbiegen in seine dargestellte, der Türform entsprechende Form gebogen ist.

Der obere Rahmenteil 1 besteht ebenfalls aus einem im Streckbiegeverfahren gebogenen Strangpreßprofil aus Aluminium, mit dessen oberer Ecke und dessen rechtem Schenkel Aluminiumformteile verbunden sind.

Das Türaußenblech 3 und das Türinnenblech 4 bestehen aus Preßteilen aus Aluminiumblech. Diese Preßteile sind in ihren Randbereichen der Form des unteren Rahmenteils 2 angepaßt, so daß sie diesen im zusammengefügten Zustand etwa schalenartig einfassen. Im zusammengefügten Zustand sind die Preßteile 3, 4 mit dem unteren Rahmenteil 2 verschweißt.

Die die Schloßverstärkung 5 und die Scharnierverstärkung 6 bildenden Gußstücke sind in ihren unteren Bereichen der Form der nach oben ragenden Schenkel des unteren Rahmenteils 2 angepaßt, so daß diese zusammengefügt und durch längsverlaufende Nähte miteinander verschweißt werden können. Die Aluminiumgußteile 5, 6 sind in ihren oberen Bereichen auch der Form der nach unten weisenden Schenkel des oberen Rahmenteils 1 angepaßt, so daß auch diese zusammengefügt und günstig miteinander verschweißt werden können.

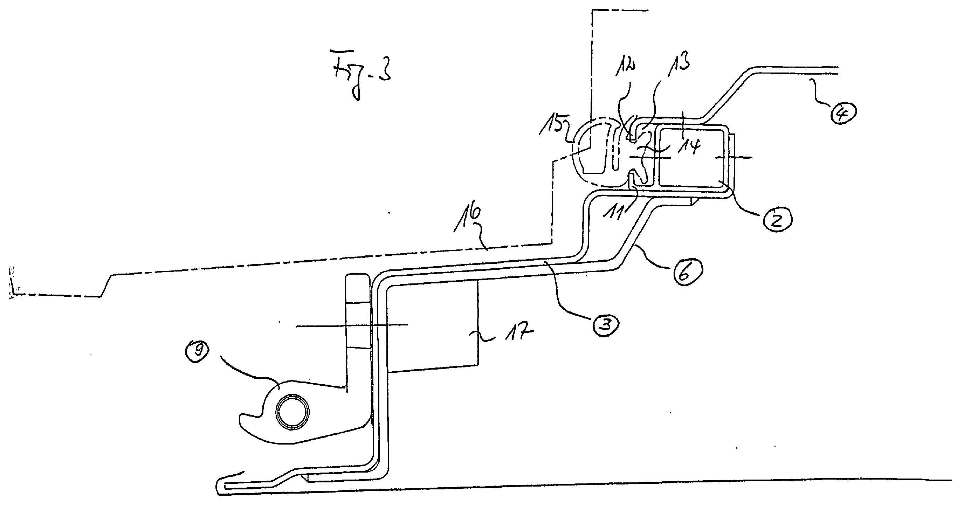

Wie aus Fig. 3 ersichtlich ist, weist das Profil des unteren Rahmenteils 2 einen abgewinkelten Fortsatz 11 auf, der mit einer abgewinkelten Kante 12 des angeschweißten preßgeformten Innenblechs 4 eine Nut 13 mit nach innen hin abgewinkelten Enden der Nutflanken bildet. In diese etwa C-förmige Nut ist das Fußteil 14 einer aus Gummi oder anderem elastomerem Material bestehenden Dichtung 15 eingezogen. Diese Dichtung dichtet die Tür im geschlossenen Zustand zu der durch die gestrichelte Linie 16 angedeuteten Karosserie ab.

Das Scharnierverstärkungsteil 6, das ein dünnwandiges Gußteil ist, ist in der aus Fig. 3 ersichtlichen Weise mit dem unteren Rahmenteil 2 bzw. dem Türaußenblech 3 verschweißt. Das schwenkbare Teil des Schamiers 9 ist in der dargestellten Weise mit der Scharnierverstärkung verschraubt.

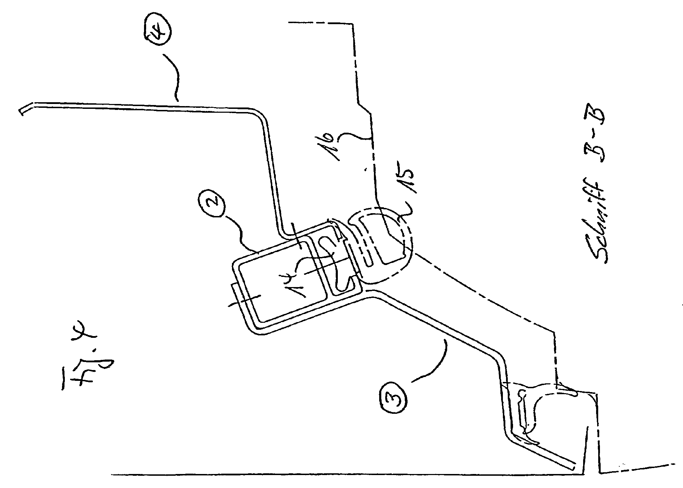

Die Art der Verbindung der Türaußen- und -innenbleche 3, 4 mit dem unteren Rahmenteil 2 ist aus Fig. 4 ersichtlich.

Die anhand der Zeichnung beschriebene Rohbautür besteht aus günstig miteinander verschweißten Aluminiumteilen, die an ihren Außenseiten durchgehende Flächen besitzen. Die der Anbindung der Schenkel der Rahmenteile und der Schachtverstärkung dienenden Schloß- und Schamierverstärkungen, die aus Aluminiumgußteilen bestehen, sind verdeckt angeordnet und können daher unschön nicht in Erscheinung treten. Die aus Einzelteilen zusammengeschweißte Rohbautür ist aufgrund verwendeten Materialien sehr leicht und besitzt dennoch die gewünschte große Steifigkeit.

## Patentansprüche

1. Fahrzeugtür mit einem unteren Türkasten und einem auf diesen aufgesetzten oberen Rahmenteil (1), wobei der Türkasten aus einem gebogenen Strangpreßprofil (2) aus Aluminium und aus mit diesem verbundenen Preßteilen aus Aluminiumblech, die die Außen- und Innenbleche (3, 4) bilden und die einteilig hergestellt sind, besteht.

2. Fahrzeugtür nach Anspruch 1, **dadurch gekennzeichnet, daß** die nach oben weisenden Schenkel des den unteren Rahmenteil (2) bildenden Strangpreßprofils aus Aluminium mit den nach unten weisenden Schenkel des ebenfalls aus einem Strangpreßprofil aus Aluminium bestehenden oberen Rahmenteils (1) durch zwischengeschaltete Schloß- und Schamierverstärkungsteile (5, 6) aus Aluminiumguß verbunden sind.

3. Fahrzeugtür nach Anspruch 1 oder 2, **dadurch gekennzeichnet, daß** die Strangpreßprofile (1, 2) mit Profilabschnitten (11) zur Aufnahme und Halterung von Dichtungen (15) versehen sind.

## Claims

1. Vehicle door with a lower door box and an upper frame part (1) placed onto the latter, the door box comprising a curved extruded profile (2) of aluminium and pressed parts of aluminium sheet which are connected to the said extruded profile, form the outside and inside panels (3, 4) and are produced as a single part.

2. Vehicle door according to Claim 1, **characterized in that** the upwardly pointing limbs of the extruded profile of aluminium forming the lower frame part (2) are connected to the downwardly pointing limbs of the upper frame part (1), which is likewise composed of an extruded profile of aluminium, by lock and hinge reinforcing parts (5, 6) of cast aluminium connected in between.

3. Vehicle door according to Claim 1 or 2, **characterized in that** the extruded profiles (1, 2) are provided with profile sections (11) for accommodating and securing seals (15).

## Revendications

1. Porte de véhicule avec un caisson de porte inférieur et une partie de cadre (1) supérieure posée dessus, le caisson de porte étant à base d'un profilé filé (2) cintré en aluminium et de parties embouties à la presse, reliées à ce profilé et en tôle d'aluminium, qui forment les tôles extérieures et intérieures (3, 4) et qui sont fabriquées d'une seule pièce.

2. Porte de véhicule selon la revendication 1, **caractérisée en ce que** les branches, dirigées vers le haut, du profilé filé, formant la partie de cadre (2) inférieure, en aluminium sont reliées avec les branches, dirigées vers le bas, de la partie de cadre (1) supérieure également à base d'un profilé filé en aluminium par des parties de renfort de serrure et de charnière (5, 6) intercalées et en fonte d'aluminium.

3. Porte de véhicule selon la revendication 1 ou 2, **caractérisée en ce que** les profilés filés (1, 2) sont dotés de parties profilées (11) pour le logement et la fixation de joints (15).
